# EUROPÄISCHE PATENTSCHRIFT

(11) **EP 2 380 833 B1**
(45) Veröffentlichungstag und Bekanntmachung des Hinweises auf die Patenterteilung: **24.09.2014**
(21) Anmeldenummer: 11002119.3
(22) Anmeldetag: 15.03.2011
(51) Int. Cl.: B65G 69/00

(54) **Reifenabweiser zur Führung eines Lastkraftwagens**
Tyre deflector for guiding a lorry
Déflecteur de pneu pour le guidage d'un camion

(30) Priorität: 23.04.2010 DE 102010018240
(43) Veröffentlichungstag der Anmeldung: 26.10.2011
(73) Patentinhaber: NANI Verladetechnik GmbH & Co. KG, 39365 Eilsleben (DE)
(72) Erfinder: Grunewald, Hans-Joachim, 14554 Seddiner See (DE)
(74) Vertreter: Vonnemann, Gerhard

(56) Entgegenhaltungen:
- EP-A1- 0 775 653
- EP-B1- 0 749 397
- CH-A- 507 418
- DE-B- 1 217 047
- DE-C1- 19 706 326
- DE-U1- 8 624 391
- US-A- 4 981 151

## Beschreibung

Die Erfindung betrifft eine Vorrichtung zum Blockieren mindestens eines Fahrzeugreifens mittels eines Hindernisses, z.B. beim Andocken eines LKW an die Ladeöffnung eins Gebäudes, wobei der Reifen an mindestens einer Seite von einem beweglichen und feststellbaren Hindernis erfasst ist, das an mindestens einer Führung in Fahrtrichtung des Fahrzeugs geführt ist. Die Erfindung betrifft auch ein Verfahren zum Blockieren eines Fahrzeugreifens zur Vermeidung eines unbeabsichtigten Entfernens eines LKW von der Ladeöffnung eines Gebäudes.

Vorrichtungen zum Blockieren von LKW sind bekannt. Sie sollen verhindern, dass sich ein LKW während des Ladevorgangs unbeabsichtigt bewegt und dadurch Menschen gefährdet, die beispielsweise mit einem Gabelstapler gerade das Fahrzeug beladen wollen. Zur Vermeidung solcher gefährlichen Situationen gibt es Keile, die vor den Reifen des Fahrzeugs gelegt werden, sobald das Fahrzeug seine Ladeposition erreicht hat.

Damit auch sichergestellt wird, dass der Keil vor den Reifen gelegt wird, ist am Keil ein Sensor vorgesehen. Dieser Sensor erzeugt ein Signal, sobald der Keil vor das Rad gelegt ist. Dieses Signal wird dann an eine Steuerung übergeben, die beispielsweise den Antrieb einer Überfahrbrücke oder eines Tores schaltet. Die Antriebe, das heißt beispielsweise der des Tores oder der der Überfahrbrücke, werden erst freigegeben, wenn das Signal des Keils anliegt.

Auf diese Weise wird das Bedienungspersonal gezwungen, vor dem Beladen des Fahrzeugs, dieses zu sichern.

Allerdings kann der aus Sicherheitsgründen vorgesehene Keil auch manipuliert werden. Es ist vorgekommen, dass Gegenstände auf den Keil gelegt wurden, um das Signal zur Freigabe des Tores oder der Überfahrbrücke zu erzeugen. Dadurch wurde die als lästig empfundene Handhabung des Keils umgangen.

Weitere Feststellmechanismen sind aus der GB 2147556 A, EP 0168067 A1, EP 0749397 B1 und GB 2112725 A bekannt. Diesen Feststellmechanismen ist gemeinsam, dass sie den Reifen in Rollrichtung von beiden Seiten mit Hindernissen umfassen. Diese Hindernisse können manuell eng an den Reifen angelegt werden, so dass das Fahrzeug nicht ungewollt aus seiner Lage entfernt werden kann. Die Anlage dieser Feststellvorrichtungen ist jedoch erst bei stehenden LKW möglich. Dazu müssen die Vorrichtungen von der Seite an den Reifen manuell angelegt werden. Die Hindernisse können vom Reifen nicht überrollt oder mitgenommen werden.

Aus keiner der vorbekannten Schriften ist eine Anregung zu entnehmen, wie eine der bekannten Vorrichtungen im Rahmen einer automatischen Sicherung des LKWs in seiner Ladeposition Verwendung finden könnte. Somit weisen auch diese bekannten Blockiervorrichtungen den Nachteil auf, dass sie manuell gehandhabt werden müssen und sich dadurch die Abfertigung des LKWs in der Ladebucht verzögert oder personell aufwändiger gestaltet.

Erst eine Blockiervorrichtung mit eigenem Antrieb, wie sie in der DE 19706326 C1 oder EP A1 0775653 beschrieben ist, ermöglicht eine Automatisierung der Sicherung des LKW in der Ladeposition, indem sie den LKW völlig selbstständig ohne zusätzliche manuelle Tätigkeit sichert. Dies wird dadurch erreicht, dass die Hindernisse miteinander durch einen Schlitten verbunden sind, der, zur motorischen Verstellung, einen Stellantrieb aufweist. Hierdurch kann der Reifen in beiden möglichen Fahrtrichtungen das Hindernis selbsttätig mitnehmen. Sobald die Hindernisse motorisch festgestellt werden, ist auch der LKW gesichert.

Führungen für ungenau anfahrende Fahrzeuge sind grundsätzlich bekannt. Beispielsweise ist eine aktive Führung aus der deutschen Auslegeschrift 1 217 047 bekannt, die an ihrem in Fahrtrichtung vorn liegenden Ende um eine vertikale Achse schwenkbar ist und deren geneigte Flächen aus um eine horizontale, auf der Oberseite der Längsschienen angeordnete Achse gegen Federkraft in Richtung auf die zugehörige Längsschiene schwenkbare Klappe besteht. Die Längsschienen sind mit einer Gleichlaufeinrichtung versehen, so dass ihre schwenkbaren Enden jeweils gleichen Abstand von ihrer gemeinsamen Längsmittelachse haben. Vorteilhaft sind die schwenkbaren Längsschienen an Zahnstangen angelenkt, die über Getriebe von Motoren bewegt werden können. Das Ein- und Ausschaltung erfolgt durch in Reihe gelegte Schalter. Diese werden von an die schwenkbaren Klappen gelenkig angeschlossenen Stößel betätigt.

Eine Zwangsführung mit in einem spitzen Winkel zulaufenden Führungsrahmen wird in DE U1 8624391 beschrieben.

Die CH 507 418 betrifft eine Anlage zum Zentrieren eines KFZ unter Anwendung von Leitplanken, bei der zwischen den Leitplanken eine querverschiebliche Oberfläche vorgesehen ist. Diese gestattet unter Einwirkung von einer auf die Leitplanke ausgeübten Kraft eine Querverschiebung des auf diese Oberfläche aufgefahrene Teils des Fahrzeugs.Aufgabe der Erfindung ist es, eine Vorrichtung und ein Verfahren sowie einen Reifenabweiser zum Blockieren eines Reifens mittels eines Hindernisses anzugeben, die es erlauben den LKW völlig selbstständig ohne zusätzliche manuelle Tätigkeit zu sichern und die sich robust bei falsch anfahrenden LKWs verhalten.

Bei einer Vorrichtung zum Blockieren mindestens eines Fahrzeugreifens mittels eines Hindernisses, z.B. beim Andocken eines LKW an Ladeöffnungen eines Gebäudes, wobei der Reifen an mindestens einer Seite von einem beweglichen und feststellbaren Hindernis erfasst ist, das an mindestens einer Führung in Fahrtrichtung des Fahrzeugs geführt ist, wird diese Aufgabe dadurch gelöst, daß mindestens ein beweglicher Reifenabweiser zur Führung des Fahrzeugreifens vorgesehen ist, wobei der Reifenabweiser um eine parallel zur Fahrtrichtung des LKW angeordnete Schwenkachse zwischen einer Sicherungs- und einer Ruhelage klappbar ausgebildet ist. Der Reifenabweiser zwingt falsch anfahrende Fahrzeuge auf einen ausreichend genauen Anfahrweg, an dessen Ende das Hindernis den Reifen blockieren kann. Dies Blockieren lässt sich vorteilhaft automatisieren, da durch den Reifenabweiser die Endstellung des Reifens ausreichend reproduzierbar feststeht. Sobald der Reifen seine reproduzierbar bestimmte Lage eingenommen hat, kann der Reifenabweiser aufgrund seiner erfindungsgemäßen Beweglichkeit entfernt werden. Der Reifenabweiser gibt dadurch ausreichend Raum für das automatisierte Hindernis, das sich in eine Sicherungslage bewegen kann, in der es den Reifen blockiert. Bei dieser Bewegung kann es nicht mit dem Reifenabweiser kollidieren, da der Reifenabweiser aus dem Bewegungsbereich des Hindernisses zuvor herausbewegt wurde. Durch die bewegliche Ausbildung des Reifenabweisers gewinnt der Konstrukteur den Freiheitsgrad ein automatisches Hindernis zu konstruieren, ohne auf den Reifenabweiser Rücksicht nehmen zu müssen.

Als besonders robuster Mechanismus zum Entfernen des Reifenabweisers hat sich eine klappbare konstruktive Lösung bewährt, bei der der Reifenabweiser um eine parallel zur Fahrtrichtung des LKW angeordnete Schwenkachse zwischen einer Sicherungs- und einer Ruhelage klappbar ausgebildet ist. In der Ruhelage führt der Reifenabweiser etwaige unpräzise anfahrende Fahrzeuge auf den geeigneten Anfahrweg. Durch Klappen in die Sicherungsstellung, wird dem Hindernis die Möglichkeit gegeben, sich in die Stellung zu bewegen, in der es den Reifen blockiert und dadurch den LKW gegen unbeabsichtigtes Entfernen von der Ladeöffnung zu sichern.

Die Maßnahme, dass die Schenkachse unterhalb der Längsachse des Abweisers angeordnet ist, reduziert die zum Abklappen des Abweisers notwendigen Kräfte.

Eine Ausgestaltung des Hindernisses, bei der das bewegliche Hindernis zwei in Fahrrichtung des LKW angeordnete Führungen aufweist, verlängert wesentlich die Lebensdauer der Mechanik bei rauhem Betrieb.

Mit Vorteil werden dabei die Führungen des Hindernisses außerhalb der Fahrspur des LKW-Reifens angeordnet.

Vorteilhafter ist jedoch eine Ausführung, bei der zwei parallele Reifenabweiser vorgesehen sind, wobei eine Führung des Hindernisses etwa mittig zwischen den Reifenabweisern angeordnet ist und/oder eine Führung außerhalb des Abstandes der Reifenabweiser in Ruhestellung angeordnet ist. Die Führungen liegen bei dieser Ausgestaltung außerhalb des Reifenrollweges. Empfindliche Teile des Antriebs zum Bewegen des Hindernisses können dadurch ebenfalls außerhalb des Reifenrollweges angeordnet werden. Diese Maßnahme erhöht deshalb wesentlich die Zuverlässigkeit der Gesamtanlage.

Eine vorteilhaft robuste Konstruktion ergibt sich, wenn zwei Hindernisse vorgesehen sind, die in einem beweglichen Rahmen angeordnet sind, der entlang der Führungen geführt ausgebildet ist, wobei vorzugsweise die zur Fahrtrichtung des Fahrzeugs parallelen Längsseiten des Rahmens geführt ausgebildet sind und diese mittels mindestens einem Querbalken fest verbunden sind. Die beiden Hindernisse umfassen den Reifen in Fahrtrichtung von beiden Seiten. Beim Anfahren der Ladeöffnung dient dabei das der Ladeöffnung näher gelegene Hindernis dazu, sich beim Anfahren der Ladeöffnung am Reifen abzustützen und so für die Mitnahme des gesamten Rahmens zu sorgen. Ein besonderer Antrieb für diese Bewegung muß deshalb mit Vorteil nicht vorgesehen werden.

Wenn die Hindernisse zum Blockieren des Reifens und/oder des mindestens einen Reifenabweisers mittels Aktuatoren, vorzugsweise mittels hydraulisch betriebener Kolben-Zylinder-Einheiten, bewegbar ausgebildet sind, lassen sich die notwendigen Bewegungsabläufe auch vorteilhaft automatisieren. Manuelle Eingriffe sind bei der Sicherung des LKW nicht mehr notwendig.

Die Sicherheit wird zusätzlich dadurch verbessert, dass das Hindernis eine mechanische Stütze zum Blockieren des Hindernisses in der Sicherungslage aufweist. Die Sicherungslage des Hindernisses wird auch bei Stromausfall oder beim Platzen eines Hydraulikschlauches beibehalten, weil das Hindernis mechanisch durch die Stütze blockiert ist.

Diese Stütze lässt sich auch mit Vorteil automatisiert entfernen, wenn der mindestens eine Aktuator an der Stütze zum Blockieren des Hindernisses angreifend ausgebildet ist.

Die Führungskräfte des LKW-Reifens lassen sich auf kurzem Wege in die Fahrbahn ableiten, wenn der Reifenabweiser eine Ruhestellung aufweist, in der er in mindestens einer Stützschale gelagert ausgebildet ist. Die Kräfte werden dann über die im Boden verankerten Schalen direkt in den Boden geleitet, ohne die Schwenklager des Schwenkmechanismus zu belasten.

Bei einer Anordnung, bei der der Antrieb und/oder die Steuerung des Antriebs am und/oder in einem benachbarten Gebäude angeordnet sind, muß sich keine Person mehr im Gefahrenbereich eines andockenden LKW bewegen.

Wenn der Rahmen eine Ruhestellung aufweist, in der ein Auffahrkeil angeordnet ist, der das Überfahren des Rahmens erleichtert, bleibt der Rahmen von der Achslast des den Rahmen überfahrenden LKW verschont. Die Auslegung des Rahmens kann so für geringere Lasten erfolgen, was ein vorteilhaft geringes Gewicht des Rahmens ermöglicht.

Ein unbeabsichtigtes Bewegen des Rahmens aus seiner Ruhestellung wird dadurch vermieden, dass der Rahmen eine kraftbetätigte Feststelleinrichtung aufweist.

Das Hindernis lässt sich auch bei unterschiedlichen Reifendurchmessern spielfrei an die Lauffläche des Reifens anlegen, wenn der Rahmen zwei relativ zueinander in Führungsrichtung des Rahmens verschiebliche Rahmenteile aufweist, deren Abstand voneinander vorteilhaft kraftbetätigt veränderbar ausgebildet ist.

Fehlbedienungen können dadurch vermieden werden, dass die Vorrichtung eine Steuerung aufweist, die mit einer Steuerung eines Tores und/oder einer Überladebrücke und/oder einer Dichtung verriegelt ausgebildet ist.

Die Aufgabe der Erfindung wird auch bei einem Verfahren zum Blockieren und Freigeben mindestens eines Fahrzeugreifens mittels eines Hindernisses, wobei der Reifen vorzugsweise an beiden Seiten von beweglichen und feststellbaren Hindernissen erfasst wird, und das Hindernis an mindestens einer Führung in Fahrtrichtung des Fahrzeugs geführt wird, dadurch gelöst, dass die folgenden Verfahrensschritte beim Bewegen der Hindernisse aus einer Ruhestellung in die Sicherungsstellung durchlaufen werden:
Überfahren mindestens eines LKW-Reifens hinter ein in seiner Bereitschaftsstellung befindliches bewegliches Hindernis,
Anfahren der Gebäudeöffnung unter Mitnahme des Hindernisses,
Entfernen des Reifenabweisers aus seiner Ruhestellung,
Bewegen des Hindernisses in die Sicherungsstellung,
Verriegeln des Rahmens,
sowie durch die folgenden Verfahrensschritte beim Bewegen des Hindernisses
aus seiner Sicherungsstellung in die Ruhestellung:
Entriegeln des Rahmens,
Bewegen des Hindernisses aus der Sicherungsstellung in seine Freigabestellung,
Bewegen des Reifenabweisers in seine Ruhestellungstellung,
Entfernen des Fahrzeugreifens von der Gebäudeöffnung unter Mitnahme der Hindernisse in die Ruhestellungstellung,
Überrollen des Hindernisses in der Ruhestellung. Die Verfahrensschritte sind nicht zwangsläufig in der Reihenfolge ihrer Erwähnung zu durchlaufen. Die Abfolge kann auch in Details abgewandelt werden.

Dasselbe gilt für die weiteren Ausgestaltungen des Verfahrens bei dem eine Anzeige eines Freisignals, vorzugsweise durch Anzeige der Farbe Grün, in der Ruhestellung und/oder durch eine Anzeige eines Sicherungssignals, vorzugsweise durch die Anzeige der Farbe Rot, erfolgt.

Zur Freigabe eines Lkw ist es von Vorteil, wenn eine Anzeige eines Freisignals nach Bewegen des Hindernisses aus der Sicherungsstellung in seine Ruhestellung erfolgt, vorzugsweise durch Anzeige der Farbe Grün, sobald der Fahrzeugabweiser in seine Ruhestellungstellung bewegt wurde.

Wenn eine Verriegelung der Vorrichtungssteuerung mit der Steuerung eines Tores und/oder einer Überladebrücke erfolgt, kann die Anlage auch von Personen bedient werden, die nicht mit den Besonderheiten der Anlagenteile vertraut sind.

Eine bevorzugte Ausführungsform der Erfindung wird beispielhaft an Hand einer Zeichnung erläutert. Die Figuren der Zeichnung zeigen im einzelnen:
- Figur 1: eine schematische perspektivische Ansicht einer erfindungsgemäßen Vorrichtung vor der Ladeöffnung eines Gebäudes in Ruhestellung,
- Figur 2: eine andere perspektivische Detailansicht der erfindungsgemäßen Vorrichtung vor der Ladeöffnung eines Gebäudes ohne Reifen,
- Figur 3: eine weitere perspektivische Detailansicht der erfindungsgemäßen Vorrichtung vor der Ladeöffnung eines Gebäudes mit LKW,
- Figur 4: eine perspektivische Detailansicht der erfindungsgemäßen Vorrichtung vor der Ladeöffnung eines Gebäudes in der Sicherungsstellung mit Darstellung eines LKW-Reifens,
- Figur 5: eine perspektivische Darstellung der erfindungsgemäßen Vorrichtung gemäß Figur 4 in der Sicherungsstellung ohne Reifen,
- Figur 6: eine perspektivische Darstellung der erfindungsgemäßen Vorrichtung gemäß Figur 5 in entsicherter Stellung ohne Reifen
- Figur 7: eine andere perspektivische Detailansicht der erfindungsgemäßen Vorrichtung in Sicherungsstellung mit Reifen und Aktuatoren,
- Figur 8: eine perspektivische Detailansicht einer alternativen Ausführungsform der erfindungsgemäßen Vorrichtung vor der Ladeöffnung eines Gebäudes ohne Reifen,
- Figur 9: eine perspektivische Detailansicht der alternativen Ausführungsform der erfindungsgemäßen Vorrichtung gemäß Figur 8 vor der Ladeöffnung eines Gebäudes in der Sicherungsstellung mit Darstellung eines LKW-Reifens,
- Figur 10: eine perspektivische Detailansicht einer weiteren alternativen Ausführungsform der erfindungsgemäßen Vorrichtung vor der Ladeöffnung eines Gebäudes ohne Reifen und
- Figur 11: eine perspektivische Detailansicht der weiteren alternativen Ausführungsform der erfindungsgemäßen Vorrichtung gemäß Figur 10 vor der Ladeöffnung eines Gebäudes in der Sicherungsstellung mit Darstellung eines LKW-Reifens,

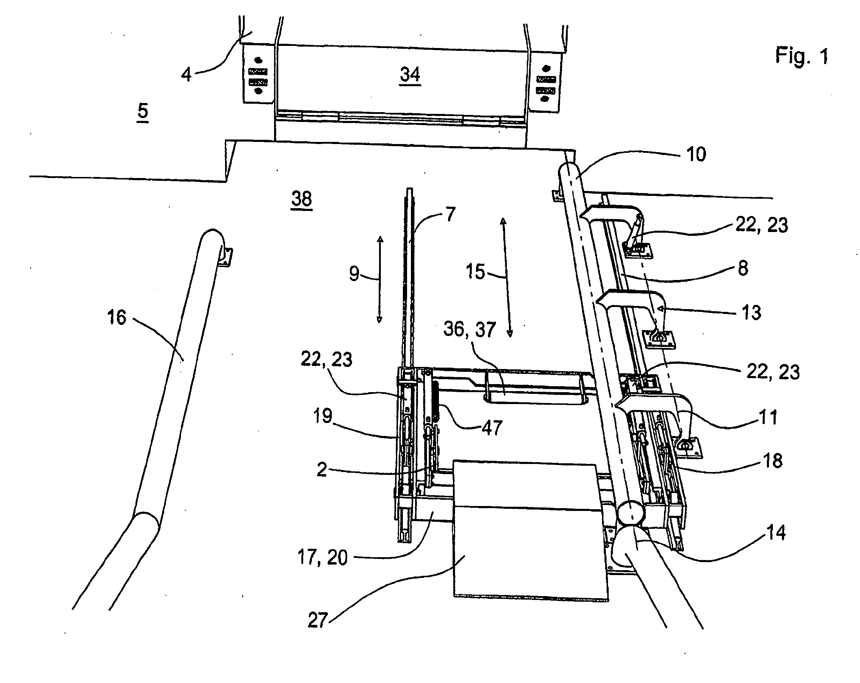

Die Figur 1 zeigt eine perspektivische Ansicht der erfindungsgemäßen Vorrichtung in Ruhestellung vor der Ladeöffnung 4 eines Gebäudes 5. In dieser Stellung befindet sich das Hindernis 2 unterhalb eines Auffahrkeils 27. Der Auffahrkeil 27 erlaubt dem Reifen eines andockenden Fahrzeuges das Hindernis zu überrollen ohne es zu belasten. Das Hindernis 2 ist in einem an den Führungen 7 und 8 geführten Rahmen 17 verschiebbar. Auf der dem Hindernis 2 gegenüberliegenden Seite des Rahmens 17 ist ein weiteres Hindernis 36 in Form einer Rolle 37 angeordnet.

Nach unten wird die Ladeöffnung 4 des Gebäudes 5 durch eine Überladebrücke 34 begrenzt, die den Höhenunterschied zwischen dem Bodenniveau des Gebäudes 5 und einem andockenden LKW überbrückt. Zur Führung des LKW ist in Fahrtrichtung 9 ein linker Reifenabweiser 16 und ein rechter Reifenabweiser 10 angeordnet, die die Reifen eines einfahrenden LKW auf eine für das automatische Blockieren geeignete Fahrspur 15 führen.

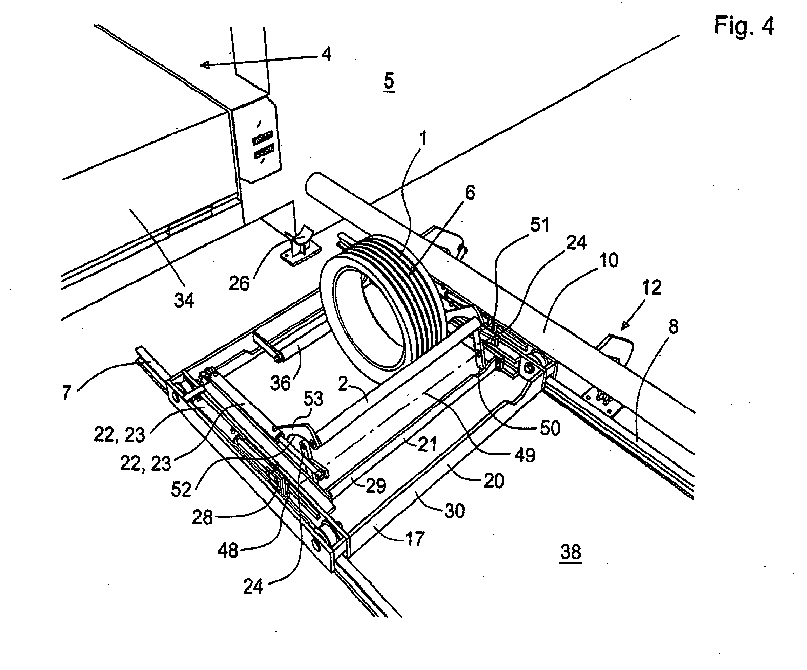

Der rechte Abweiser 10 kann aus der dargestellten Ruhelage 13 um eine zu seiner Längsachse 14 parallelen Schwenkachse 11 in eine in Figuren 4 - 6 dargestellte Sicherungslage geklappt werden.

Bei der in Figur 1 dargestellten Ruhelage 13 überdeckt der rechte Reifenabweiser 10 die rechte Führung 8 des Rahmens 17. Die Achse 14 des rechten Reifenabweisers 10 befindet sich somit zwischen den Führungen 7 und 8 des Rahmens 17 und schützt dadurch auch die in der Nähe der rechten Längsseite 18 befindlichen Betätigungselemente wie Aktuator 22, das heißt die Kolben-Zylinder-Einheit 23, zur Betätigung des Hindernisses 2.

In der Nähe der anderen Längsseite 19 des Rahmens 17 befinden sich weitere Betätigungselemente, das heißt Aktuator 22 als Kolben-Zylinder-Einheit 23. Sie sind in etwa in der Mitte zwischen den Reifenabweisern 10 und 16 angeordnet. Dadurch sind auch diese Betätigungselemente außerhalb der Fahrspur 15 des Fahrzeugs gelegen, so dass sie ebenfalls durch einfahrende Fahrzeuge keinen Schaden nehmen können. Der die beiden Längsseiten 18 und 19 verbindende Querbalken 20 kann von einem Reifen leicht überwunden werden, da der Auffahrkeil 27 den Querbalken 20 einschließlich des Hindernisses 2 in Richtung der Fahrspur 15 überdeckt.

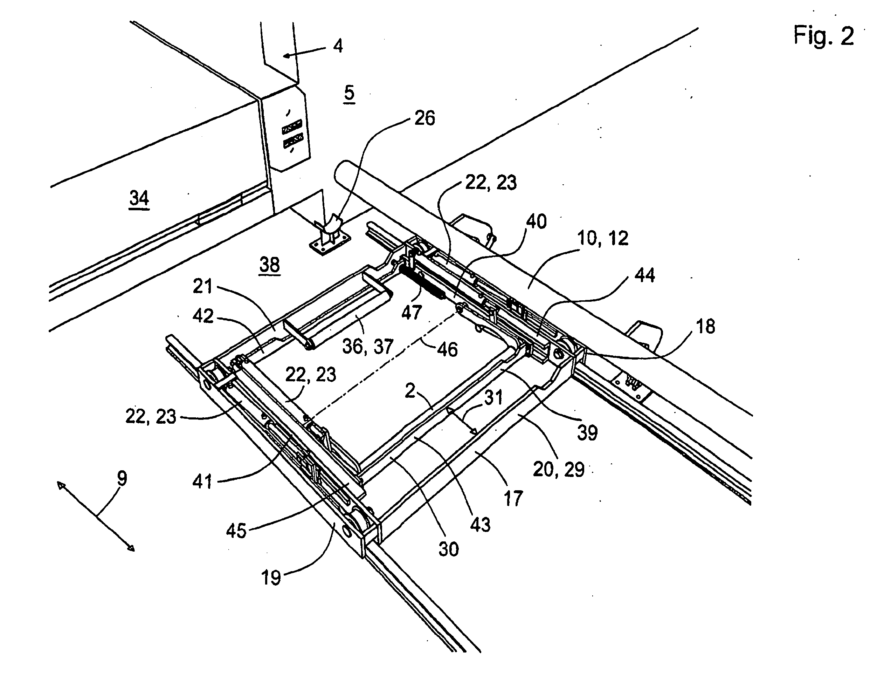

Figur 2 zeigt eine andere perspektivische Ansicht der erfindungsgemäßen Vorrichtung, bei der der Rahmen 17 mit dem Hindernis 2 annähernd seine Endstellung vor der Ladeöffnung 4 des Gebäudes 5 erreicht hat. Der rechte Reifenabweiser 10 ist dabei bereits in seine Sicherungsstellung 12 hochgeklappt. Durch das Schwenken des rechten Reifenabweisers 10 hat er die Stützschale 26 verlassen, in der er in seiner in Figur 1 dargestellten Ruhelage 13 aufliegt. Die Stützschalen 26 leiten die Führungskräfte des Reifenabweisers 10 direkt in die vor dem Gebäude 5 liegende Verkehrsfläche 38.

Der Rahmen 17 besteht aus den beiden Längsseiten 18 und 19, die von einem vorderen Querbalken 20 und einem hinteren Querbalken 21 zu einem geschlossenen Rahmen 17 verbunden sind. Innerhalb dieses Rahmens ist ein weiterer Rahmen 39 angeordnet. Rahmen 39 wird durch Längsseiten 40 und 41 mittels der Querbalken 42 und 43 ebenfalls zu einem Rahmen geschlossen, der in Führungen 44 und 45 in einer zu Verkehrsfläche 38 parallelen Ebene innerhalb des Rahmens 17 in Fahrtrichtung 9 verschiebar gelagert ist. Der Abstand 31 der beiden vorderen Querbalken 20 und 43 ist folglich veränderbar. Da das Hindernis 36, d. h. Rolle 37, fest mit dem hinteren Querbalken 21 des Rahmens 17 verbunden ist und das Hindernis 2 um Achse 46 schwenkbar in Rahmen 39 gelagert ist, ist somit auch der Abstand der beiden Hindernisse relativ zueinander veränderbar.

Eine Druckfeder 47 wirkt dabei in der Weise, dass der Abstand 31 zwischen Rahmen 17 und 39 möglichst groß ist, d. h. der Abstand zwischen den Hindernissen 2 und 36 möglichst gering ist, damit auch kleine Reifendurchmesser spielfrei von den Hindernissen umgriffen werden können.

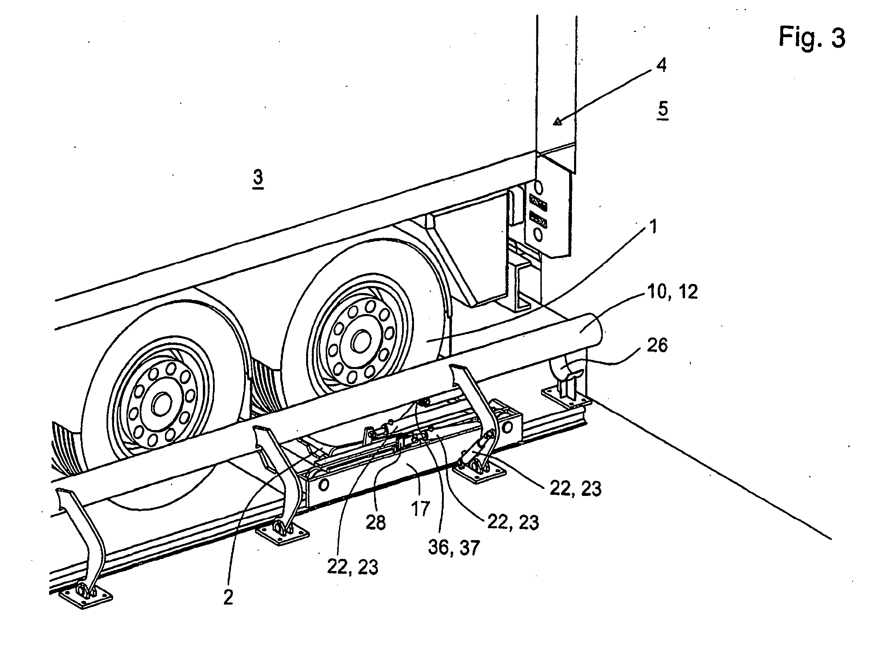

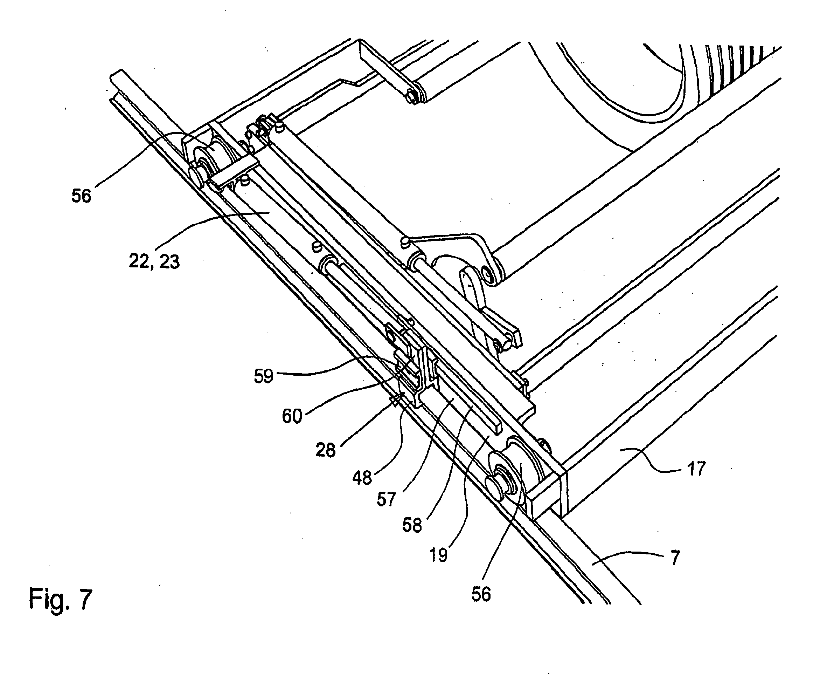

Figur 3 zeigt die erfindungsgemäße Blockiervorrichtung mit einem vor der Ladeöffnung 4 des Gebäudes 5 blockierten LKW. Der rechten Reifenabweiser 10 ist in der Blockierlage 12 aus der Stützschale in die Blockierstellung geschwenkt. Dieser Schwenkvorgang erfolgt kraftbetätigt durch die Kolben-Zylinder-Einheit 23 des Aktuators 22. Der hintere Reifen 1 des LKW 3 hat beim Einfahren den Rahmen 17 in die dargestellte Position mitgenommen. Dabei stützt sich das Hindernis 36 bzw. Rolle 37 auf der Lauffläche des Reifens 1 ab, so dass sich der Rahmen 17, der mit dem Hindernis 36 bzw. Rolle 37 verbunden ist, mitbewegt. Hindernis 2, ebenfalls eine Rolle, legt sich anschließend ebenfalls an die Lauffläche des Reifens 1 an. Dies erfolgt durch den Aktuator 22, eine Kolben-Zylinder-Einheit 23. Ein weiterer Aktuator 22 blockiert dann den Feststellmechanismus 28. Der Feststellmechanismus 28 verriegelt damit den Rahmen 17 in der dargestellten Position. Der Feststellmechanismus 28 ist als Klemmmechanismus ausgebildet, bei dem der Aktuator 22 durch Kippen einer die Führung 7 bzw. 8 teilweise umhüllende Hülse 48 (Figur 7) sich auf der Führung so verklemmt, dass der Rahmen 17 in seiner jeweiligen Lage festgestellt wird.

Grundsätzlich ist es alternativ auch möglich, dass statt des Rahmenteils 30 auch das Rahmenteil 29 oder beide gleichzeitig in analoger Weise festgestellt wird.

Figur 4 zeigt den in Figur 3 dargestellten Zustand der Blockiervorrichtung aus einer anderen Blickrichtung, wobei vom LKW der Übersichtlichkeit wegen nur beispielhaft die Lauffläche eines Reifens gezeigt ist. Der Aktuator 22 bzw. 23 zum Anlegen des Hindernisses 2 greift dabei nicht direkt am Hindernis 2 an, sondern betätigt eine Stütze 24. Diese Stütze ist um Achse 49 im Rahmenteil 29 schwenkbar gelagert, so dass sich zwei gegenüberliegende Hebelenden 50, 51 ergeben. Das untere Hebelende 50 legt sich beim Aufstellen des Hindernisses 2 mittels des Aktuators 22, 23 auf der Verkehrsfläche 38 ab. Das gegenüberliegende Hebelende 41 der Stütze 24 bewegt dabei über eine Bahnkurve 52 des Schwenkhebels 53 das Hindernis 2 in Richtung auf die Lauffläche des Reifens 1, bis es auf der dem Gebäude abgewandten Seite 6 des Reifens 1 zur Anlage kommt. Die Reaktionskräfte eines blockierten Reifens werden somit vorteilhaft direkt vom Hindernis 2 über Hebel 53 in die Stütze 24 auf die Verkehrsfläche 38 übertragen. Die verschiedenen Betätigungselemente der Mechanik werden dadurch von den Reaktionskräften des Reifens nicht direkt belastet.

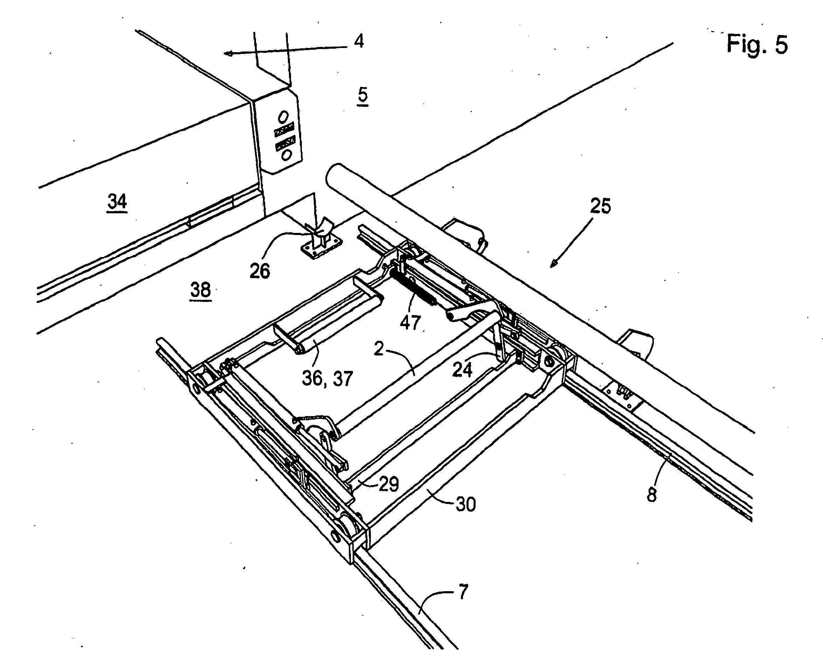

Figur 5 zeigt die erfindungsgemäße Blockiervorrichtung in der Sicherungslage 25 gemäß Figur 4 in diesem Fall jedoch der Übersichtlichkeit halber nochmals ohne Reifen.

In allen Abbildungen sind sowohl die für die Energiezufuhr notwenigen Leitungen als auch elektrische Leitungen der Übersichtlichkeit wegen nicht dargestellt. Der Fachmann wird diese Leitungen von den beweglichen Rahmen mitschleppen lassen und an der Gebäudewand eine bekannte Trommel zum Auf- und Abrollen der erforderlichen Leitungen vorsehen.

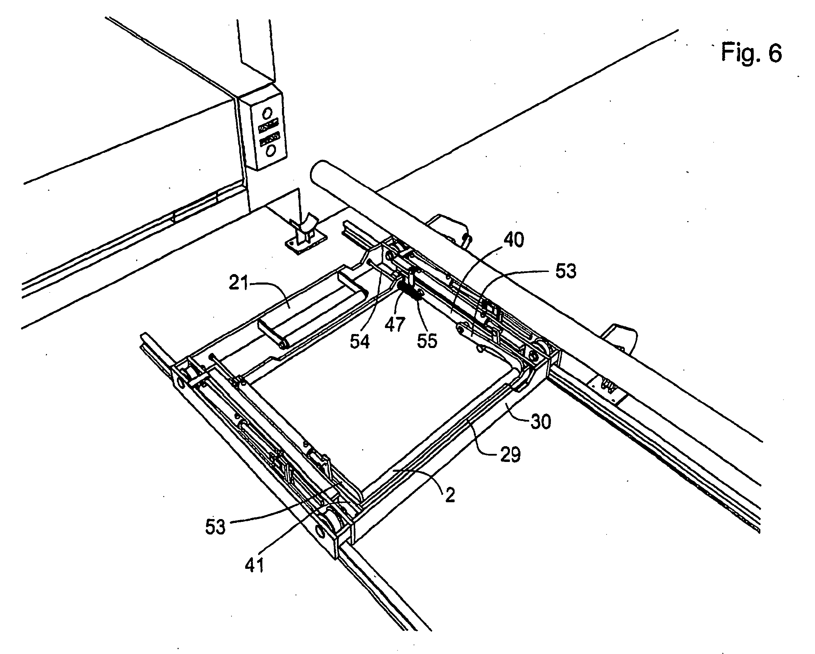

Figur 6 zeigt wiederum die Blockvorrichtung gemäß Figur 5 jedoch in der Stellung, in der sie vom LKW nach Beendigung eines Ladevorgangs wieder mitgenommen wird, um ihre ursprüngliche Ausgangslage, nämlich die Ruhelage unterhalb des Auffahrkeils 27 einzunehmen. Dabei stützt sich das Hindernis 2 in der dargestellten Lage weiterhin auf der Lauffläche des ausfahrenden Reifens ab. Über die Schwingen 53 und Längsseiten 40, 41 wird zunächst das Rahmenteil 29 mitgenommen. Dabei wird die Druckfeder 47 auf der Zugstange 45 komprimiert, bis die Stützkraft der Feder 47 auf der Endmutter 55 ausreicht, über Zugstange 54, die fest mit Querbalken 21 verbunden ist, auch das Rahmenteil 30 in Richtung des Auffahrkeils mitnimmt.

Sobald der Reifen den Auffahrkeil 27 erreicht, überrollt er diesen und lässt damit die erfindungsgemäße Blockiervorrichtung in ihrer Endstellung unterhalb des Auffahrkeils 27 zurück, wie in Figur 1 dargestellt.

Danach wird auch der Reifenabweiser 10 mittels Aktuator 22 bzw. Kolben-Zylinder-Einheit 23 wieder in seine ursprüngliche Ruhelage 13 geschwenkt. Damit ist die gesamte erfindungsgemäße Vorrichtung für den nächsten anfahrenden LKW bereit.

In Figur 7 ist als Detail der Feststellmechanismus besser sichtbar dargestellt. Zu diesem Zweck ist die vordere Platte der Längsseite 19 fortgelassen worden. Längsseite 19 besteht nämlich aus zwei parallelen Platten, zwischen denen die Rollen 56 gelagert sind, auf denen der Rahmen 17 auf der Führung 7, 8 abrollt. Die beiden parallelen Platten 57 der Längsseite 19 weisen auf ihren gegenüberliegenden Seiten je eine Leiste 58 auf. Die Leisten greifen in u-förmige Profilteile 59 der die Führung 7 umgreifenden Hülse 48 ein. Der Aktuator 22 bzw. 23 greift außermittig an Hebel 60 so an, dass bei seiner Betätigung sich die Hülse 48 auf dem Führungsprofil 7 und die U-Profilteile 59 auf der Leiste 58 verklemmen und dadurch die Blockiervorrichtung auf der Führung 7 sicher festgestellt ist.

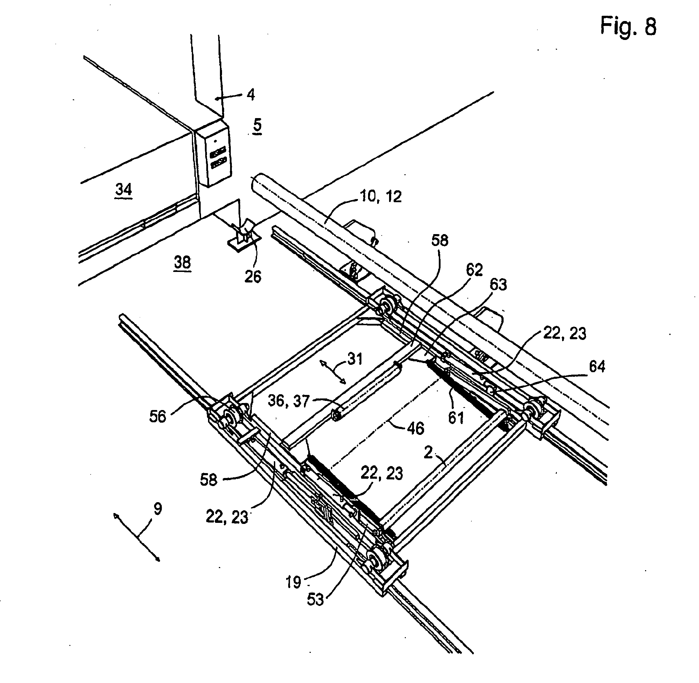

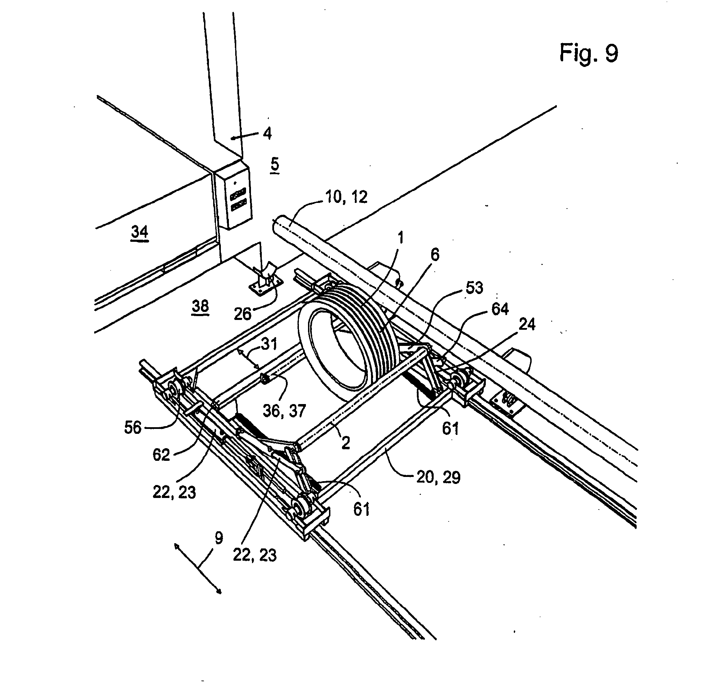

Figuren 8 und 9 zeigen eine perspektivische Ansicht einer anderen Ausgestaltung der erfindungsgemäßen Vorrichtung. Im Unterschied zur Ausführung gemäß Figuren 1 bis 7 ist der Abstand 31 der Rolle 37 jetzt zum hinteren Querbalken 21 veränderlich. Die Rolle 37 ist nicht mit dem hinteren Querbalken 21 sondern mit dem Querbalken 62 drehbeweglich verbunden. Das vordere Hindernis 2 ist über Schwenkachse 46 nun nicht mehr an den Längsseiten 40, 41 des Rahmens 39 sondern an den Längsseiten des Rahmens 17 befestigt. Statt der Druckfeder 47 drängt eine Zugfeder 61, die zwischen Aussteifung 63 und vorderen Querbalken 20 wirkt, die Hindernisse 2 und 36 in Richtung auf einander zu. Die übrigen Teile funktionieren analog zu der Ausführungsform der Figuren 1 bis 7.

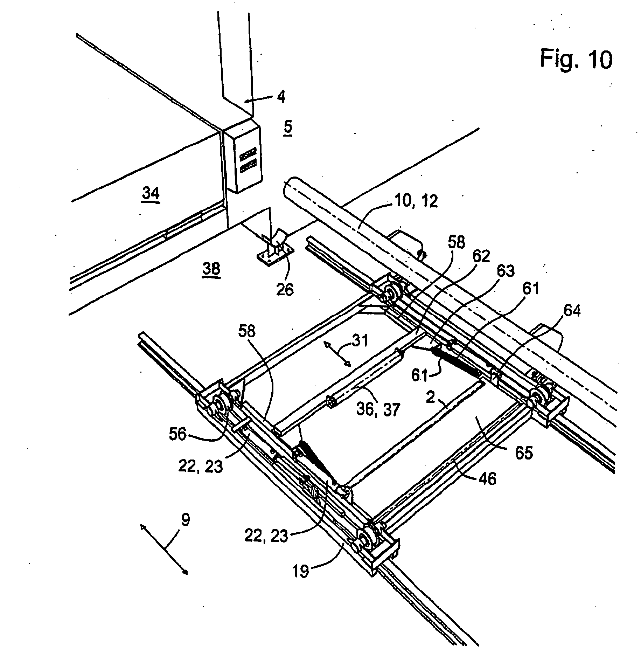

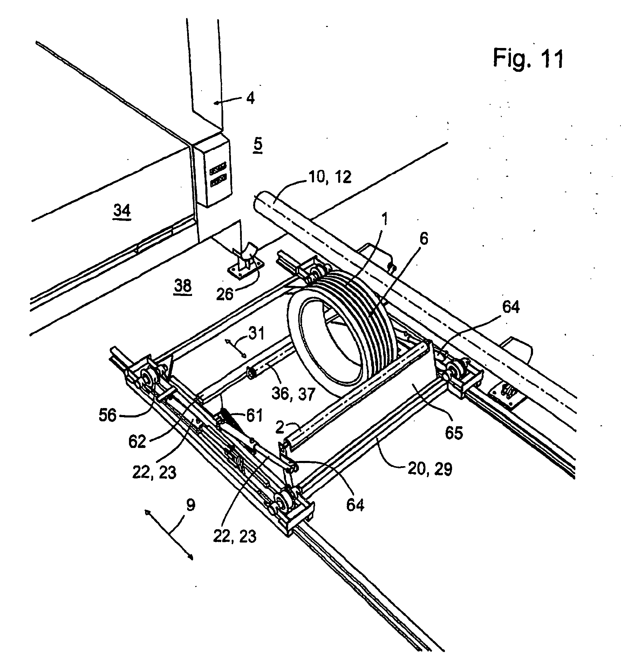

Figuren 10 und 11 zeigen eine weitere Ausführungsform der erfindungsgemäßen Vorrichtung, bei der die Schwenkachse 46 auf die andere Seite des vorderen Hindernisses 2 verlegt ist. Hindernis 2 ist drehbeweglich an der dem Rad zugewandten Kante der Klappe 65 befestigt, und die gegenüberliegende Kante der Platte 65 ist um Achse 46 schwenkbar, die direkt neben dem vorderen Querbalken 20 angeordnet ist. Die Achse 46 ist in Rahmen 17 gelagert. Zum Aufstellen des Hindernisses 2 greifen die Aktuatoren 22 an der Hebelplatte 64 an.. Auch hier funktionieren die übrigen Teile analog zu den in den Figuren 1 bis 9 beschriebenen Ausführungsformen.

Mit einer bekannten programmierbaren Steuerung beispielsweise, werden die Bewegungsvorgänge in ihrer Abfolge vorgegeben. Mit Vorteil können die Bewegungsabläufe auch mit weiteren Steuerungen gekoppelt werden, z. B. der Steuerung für die dargestellte Überladebrücke 34 oder für ein nicht dargestelltes Rolltor und/oder eine nicht dargestellte aufblasbare oder bewegliche Dichtung, die den Spalt zwischen Gebäude und LKW abdichtet.

Der jeweilige Betriebszustand der Blockiervorrichtung wird dabei mittels einer geeigneten Ampelanlage dem Fahrer des sich annähernden LKW deutlich angezeigt. Die Steuerung der Überladebrücke 34 kann beispielsweise so gestaltet werden, dass die Überladebrücke 34 erst in Betrieb gesetzt werden kann, wenn der LKW seine Endstellung erreicht hat und die erfindungsgemäße Blockiervorrichtung den Reifen gegen unbeabsichtigtes Fortrollen gesichert hat. Analog kann mit Vorteil die Verriegelung mit der Steuerung einer aufblasbaren Dichtung so erfolgen, dass auch die Dichtung erst angelegt werden kann, wenn der LKW mittels der erfindungsgemäßen Blockiervorrichtung gesichert ist. Zum Erkennen der Sicherungslage können geeignete zusätzliche Sensoren vorgesehen sein, die das Signal "LKW gesichert" an die vorhandene bzw. die vorhandenen Steuerungen weitergeben.

Mit der beschriebenen Blockiervorrichtung ist es möglich, den gesamten Vorgang beim Andocken eines LKW an die Öffnung eines Gebäudes automatisch und gleichzeitig sicher ohne notwendige manuelle Eingriffe ablaufen zu lassen. Alle Teile der Vorrichtung sind gegen falsch anfahrende LKW gesichert.

### Bezugsziffernliste

1. Reifen
2. Hindernis
3. Lastkraftwagen
4. Ladeöffnung
5. Gebäude
6. Seite
7. Führung, Schiene
8. Führung, Schiene
9. Fahrtrichtung
10. Reifenabweiser
11. Schwenkachse
12. Sicherungslage
13. Ruhelage
14.Längsachse
15. Fahrspur
16. Reifenabweiser
17. Rahmen
18. Längsseite
19. Längsseite
20. Querbalken (vorne)
21. Querbalken (hinten)
22. Aktuator
23. Kolben-Zylinder-Einheit
24. Stütze
25. Sicherungslage
26. Stützschale
27. Auffahrkeil
28. Feststelleinrichtung
29. Rahmenteil
30. Rahmenteil
31. Abstand
32. Steuerung (nicht dargestellt)
33. Tor (nicht dargestellt)
34. Überladebrücke
35. Dichtung (nicht dargestellt)
36. Weiteres Hindernis
37. Rolle
38. Verkehrsfläche
39. Rahmen
40. Längsseite
41. Längsseite
42. Querbalken
43. Querbalken
44. Führung
45. Führung
46. Achse
47. Druckfeder
48. Hülse
49. Achse
50. Hebelende
51. Hebelende
52. Bahnkurve
53. Hebel (Schwinge)
54. Zugstange
55. Endmutter
56. Rolle
57. Platte
58. Leiste
59. Profilteil
60. Hebel
61. Zugfeder
62. Querbalken
63. Aussteifung
64. Hebelplatte
65. Klappe

## Patentansprüche

1. Vorrichtung zum Blockieren mindestens eines Fahrzeugreifens (1) mittels eines Hindernisses (2), z.B. beim Andocken eines LKW (3) an Ladeöffnungen (4) eines Gebäudes (5), wobei der Reifen (1) an mindestens einer Seite (6) von einem beweglichen und feststellbaren Hindernis (2) erfasst ist, das an mindestens einer Führung (7, 8) in Fahrtrichtung (9) des Fahrzeugs (3) geführt ist, **dadurch gekennzeichnet, dass** mindestens ein beweglicher Reifenabweiser (10) zur Führung des LKW (3) vorgesehen ist, wobei der Reifenabweiser (10) um eine parallel zur Fahrtrichtung (9) des LKW (3) angeordnete Schwenkachse (11) zwischen einer Sicherungs- (12) und einer Ruhelage (13) klappbar ausgebildet ist und wobei der Reifenabweiser in seiner Ruhelage die mindestens eine Führung überdeckend und in seiner Sicherungslage ausserhalb eines Bewegungsbereichs des Hindernisses angeordnet ist.

2. Vorrichtung nach Anspruch 1, **dadurch gekennzeichnet, dass** die Schwenkachse (11) unterhalb der Längsachse (14) des Abweisers angeordnet ist.

3. Vorrichtung nach Anspruch 1 oder 2, **dadurch gekennzeichnet, dass** das bewegliche Hindernis (2) zwei in Fahrtrichtung (9) des LKW (3) angeordnete Führungen (7, 8) aufweist und die Führungen (7, 8) außerhalb der Fahrspur (15) des LKW-Reifens (1) angeordnet sind.

4. Vorrichtung nach einem oder mehreren der vorhergehenden Ansprüche, **dadurch gekennzeichnet, dass** zwei parallele Reifenabweiser (10, 16) vorgesehen sind, wobei eine Führung (7, 8) etwa mittig zwischen den Reifenabweisern (10, 16) angeordnet ist und/oder eine Führung (7, 8) außerhalb des Abstandes der Reifenabweiser (10, 16) in Ruhelage (13) angeordnet ist.

5. Vorrichtung nach einem oder mehreren der vorhergehenden Ansprüche, **dadurch gekennzeichnet, dass** zwei Hindernisse (2, 21) vorgesehen sind, die in einem beweglichen Rahmen (17) angeordnet sind, der entlang der Führungen (7, 8) geführt ausgebildet ist, wobei vorzugsweise die zur Fahrtrichtung (9) des Fahrzeugs (3) parallelen Längsseiten (18, 19) des Rahmens (17) geführt ausgebildet sind und diese mittels mindestens einem Querbalken (20) fest verbunden sind.

6. Vorrichtung nach einem oder mehreren der vorhergehenden Ansprüche, **dadurch gekennzeichnet, dass** mindestens ein Hindernis (2) zum Blockieren des Reifens (1) und/oder des mindestens einen Reifenabweisers (10, 16) mittels Aktuatoren (22), vorzugsweise mittels hydraulisch betriebener Kolben-Zylinder-Einheiten (23), bewegbar ausgebildet sind, und vorzugsweise das mindestens eine Hindernis (2) eine mechanische Stütze (24) zum Blockieren des Hindernisses (2) in der Sicherungslage (25) aufweist, und insbesondere der mindestens eine Aktuator (22) an der Stütze (24) zum Blockieren des Hindernisses (2) angreifend ausgebildet ist.

7. Vorrichtung nach einem oder mehreren der vorhergehenden Ansprüche, **dadurch gekennzeichnet, dass** der Reifenabweiser (10, 16) eine Ruhelage (13) aufweist, in der er in mindestens einer Stützschale (26) gelagert ausgebildet ist und/oder der Antrieb und/oder die Steuerung des Antriebs am und/oder in einem Gebäude (5) angeordnet sind und/oder der Rahmen (17) eine Ruhelage (13) aufweist, in der ein Auffahrkeil (27) angeordnet ist, der das Überfahren des Rahmens (17) erleichtert und/oder der Rahmen (17) eine kraftbetätigte Feststelleinrichtung (28) aufweist, wobei vorzugsweise der Rahmen (17) zwei zueinander in Führungsrichtung des Rahmens relativ zueinander verschiebliche Rahmenteile (29, 30) aufweist, deren Abstand (31) voneinander vorteilhaft kraftbetätigt veränderbar ausgebildet ist.

8. Vorrichtung nach einem oder mehreren der vorhergehenden Ansprüche, **dadurch gekennzeichnet, dass** die Vorrichtung eine Steuerung (92) aufweist, die mit einer Steuerung eines Tores (33) und/oder einer Überladebrücke (34) und/oder einer Dichtung (35) verriegelt ausgebildet ist.

9. Verfahren zum Blockieren und Freigeben mindestens eines FahrzeugReifens mittels eines Hindernisses, wobei der Reifen vorzugsweise an
beiden Seiten von beweglichen und feststellbaren Hindernissen erfasst wird, und das Hindernis an mindestens einer Führung in Fahrtrichtung des Fahrzeugs geführt wird, **gekennzeichnet durch** die folgenden Verfahrensschritte beim Bewegen der Hindernisse aus einer Ruhelage in
eine Sicherungslage:
Überfahren mindestens eines LKW-Reifens hinter ein in seiner Bereitschaftsstellung befindliches bewegliches Hindernis,
Anfahren der Gebäudeöffnung unter Mitnahme des Hindernisses,
Entfernen des Reifenabweisers aus einer Ruhelage **durch** Klappen um eine horizontale Schwenkachse,
Bewegen des Hindernisses in seine Sicherungslage,
Verriegeln des Rahmens,
sowie **durch** die folgenden Verfahrensschritte beim Bewegen des Hindernisses aus seiner Sicherungslage in seine Ruhelage:
Entriegeln des Rahmens,
Bewegen des Hindernisses aus seiner Sicherungslage in seine Freigabestellung,
Bewegen des Reifenabweisers in seine Ruhelage **durch** Klappen um eine horizontale Schwenkachse,
Entfernen des Fahrzeug-Reifens von der Gebäudeöffnung unter Mitnahme der Hindernisse in seine Ruhelage,
Überrollen des Hindernisses in seiner Ruhelage.

10. Verfahren nach Anspruch 9, gekenntzeichnet durch eine Anzeige eines Freisignals, vorzugsweise durch Anzeige der Farbe Grün, in der Ruhelage und/oder durch eine Anzeige eines Sicherungssignals, vorzugsweise durch die Anzeige der Farbe Rot, wobei vorzugsweise die Anzeige des Freisignals nach Bewegen des Hindernisses aus seiner Sicherungslage in seine Ruhelage erfolgt.

## Claims

1. A device for blocking at least one vehicle tire (1) by an obstacle (2), for example during docking of a truck (3) at charging openings (4) of a building (5), said tire (1) being engaged on at least one side by a movable and lockable obstacle (2) guided along at least one guidance means (7, 8) in a driving direction (9) of said vehicle (3), **characterized in that** at least one movable tire deflector (10) is provided for guiding said truck (3), said tire deflector (10) being configured to be foldable between a safeguard position (12) and a rest position (13) about a pivot axis (11) disposed in parallel to said driving direction (9) of said truck (3), and wherein said tire deflector in its rest position overlaps said at least one guidance means, and in its safeguard position is disposed outside of a moving range of said obstacle.

2. A device according to claim 1, **characterized in that** said pivot axis (11) is disposed underneath a longitudinal axis (14) of said deflector.

3. A device according to claim 1 or 2, **characterized in that** said movable obstacle (2) has two guidance means (7, 8) disposed in a driving direction (9) of said truck (3), said guidance means (7, 8) being disposed outside of a track (15) of said truck tire (1).

4. A device according to one or more of the preceding claims, **characterized in that** there are two parallel tire deflectors (10, 16) provided, wherein a guidance means (7, 8) is disposed approximately in the middle between said tire deflectors (10, 16), and/or a guidance means (7, 8) is disposed outside of the distance between said tire deflectors (10, 16) in their rest positions (13).

5. A device according to one or more of the preceding claims, **characterized in that** there are two obstacles (2, 21) provided which are disposed within a movable frame (17) formed along said guidance means (7, 8), wherein the long sides (18, 19) of said frame (17), which extend in parallel to said driving direction (9) of said vehicle (3), are of a guided type and firmly connected by at least one crossbar (20).

6. A device according to one or more of the preceding claims, **characterized in that** at least one obstacle (2) for blocking said tire (1) and/or said at least one tire deflector (10, 16) is configured to be movable by means of actuators (22), preferably by means of hydraulically operated piston-cylinder units (23), said at least one obstacle (2) preferably having a mechanical support (24) for blocking said obstacle (2) in said safeguard position (25), and wherein in particular said at least one actuator (22) at said support (24) is configured to engage and block said obstacle (2).

7. A device according to one or more of the preceding claims, **characterized in that** said tire deflector (10, 16) has a rest position (13) and is configured to be resting in a bearing back (26) when assuming said rest position, and/or at least one of a drive and a drive control means is disposed at and/or within a building (5), and/or said frame (17) has a rest position (13) in which a wheel leveller (27) is arranged to facilitate driving across said frame (17), and/or said frame (17) has a power-operated locking means (28), wherein said frame (17) preferably has two frame parts (29, 30) adapted to be slidably movable towards each other in a guiding direction of said frame, and being separated by a distance (31) which is adapted to be advantageously variable by power-operation.

8. A device according to one or more of the preceding claims, **characterized in that** said device has a control means (92) configured to be locked with a control means of a door (33) and/or a loading bridge (34) and/or a seal (35).

9. A method for blocking and releasing at least one vehicle tire by means of an obstacle, wherein said tire is preferably held at both sides by movable and lockable obstacles, and said obstacle is guided along at least one guidance means in a driving direction of said vehicle, **characterized by** comprising the following operating steps when moving said obstacles from a rest position into a safeguard position:
driving at least one truck tire into a position behind a movable obstacle in its standby position,
driving towards said building opening while carrying along said obstacle,
removing said tire deflector from its rest position by folding about a horizontal pivot axis,
moving said obstacle into its safeguard position,
locking said frame,
and by the following operating steps when moving said obstacle from its safeguard position into its rest position:
unlocking said frame,
moving said obstacle from its safeguard position into its release position,
moving said tire deflector into its rest position by folding about a horizontal pivot axis,
moving said vehicle tire away from said building opening while carrying along said obstacles into their respective rest positions,
rolling across said obstacles in their rest positions.

10. A method according to claim 9, **characterized in that** a permission signal is displayed if said rest position is assumed, preferably by displaying a green color, and/or a warning signal is displayed, preferably by displaying a red color, wherein said permission signal is preferably displayed after said obstacle has been moved from its safeguard position into its rest position.

## Revendications

1. Dispositif destiné au blocage d'au moins un pneu de véhicule (1) à l'aide d'un obstacle (2), par exemple lors de l'arrimage d'un camion (3) à une ouverture de chargement (4) d'un bâtiment (5), le pneu (1) étant saisi sur au moins un côté par un obstacle (2) mobile et fixable qui est déplacé le long d'au moins un guidage (7, 8) dans le sens de marche (9) du véhicule (3), **caractérisé en ce qu'**il est prévu au moins un déflecteur de pneu (10) mobile destiné au guidage du camion (3), ledit déflecteur de pneu (10) étant réalisé pivotant autour d'un axe de pivotement (11) disposé parallèlement au sens de marche (9) du camion (3) entre une position de sécurité (12) et une position de repos (13), et ledit déflecteur de pneu recouvrant dans sa position de repos ledit au moins un guidage et étant disposé dans sa position de sécurité en dehors d'une plage de mouvement de l'obstacle.

2. Dispositif selon la revendication 1, **caractérisé en ce que** l'axe de pivotement (11) est disposé au-dessous de l'axe longitudinal (14) du déflecteur.

3. Dispositif selon l'une des revendications 1 ou 2, **caractérisé en ce que** l'obstacle mobile (2) présente deux guidages (7, 8) s'étendant dans le sens de marche (9) du camion (3) et lesdits guidages (7, 8) sont disposés en dehors de la trace (15) du pneu (1) du camion.

4. Dispositif selon l'une ou plusieurs des revendications précédentes, **caractérisé en ce que** deux déflecteurs de pneus (10, 16) parallèles sont prévus, un guidage (7, 8) étant disposé approximativement au milieu de l'espace entre les déflecteurs de pneus (10, 16) et/ou un guidage (7, 8) étant disposé en dehors de l'espace entre les déflecteurs de pneus (10, 16) en position de repos (13).

5. Dispositif selon l'une ou plusieurs des revendications précédentes, **caractérisé en ce que** deux obstacles (2, 21) sont prévus qui sont disposés dans un cadre mobile (17) guidé le long des guidages (7, 8), les côtés longitudinaux (18, 19) du cadre (17) parallèles dans le sens de marche (9) du véhicule (3) de préférence étant réalisés de façon guidée et reliés entre eux à l'aide d'au moins une traverse (20).

6. Dispositif selon l'une ou plusieurs des revendications précédentes, **caractérisé en ce qu'** au moins un obstacle (2) destiné à bloquer le pneu (1) et/ou ledit au moins un déflecteur de pneu (10, 16) au moyen d'actionneurs (22), de préférence au moyen d'unités hydrauliques piston-cylindre (23) est réalisé de façon mobile et que de préférence ledit au moins un obstacle (2) présente un support mécanique (24) pour bloquer l'obstacle (2) en position de blocage (25), ledit au moins un actionneur (22) en particulier étant conçu de façon à agir sur le support (24) pour bloquer l'obstacle (2).

7. Dispositif selon l'une ou plusieurs des revendications précédentes, **caractérisé en ce que** le déflecteur de pneu (10, 16) présente une position de repos (13), dans laquelle il est logé dans au moins une coque d'appui (26) et/ou l'entraînement et/ou la commande de l'entraînement sont disposés sur et/ou dans un bâtiment (5) et/ou le cadre (17) présente une position de repos (13) dans laquelle est disposée une cale (27) facilitant le franchissement du cadre (17) et/ou le cadre (17) présente un moyen d'arrêt (28) actionné mécaniquement, ledit cadre (17) de préférence présentant deux parties (29, 30) déplaçables l'une par rapport à l'autre dans le sens de guidage du cadre et dont l'écartement (31) pouvant être varié avantageusement par un mécanisme d'actionnement.

8. Dispositif selon l'une ou plusieurs des revendications précédentes, **caractérisé en ce que** ledit dispositif présente une commande (92) qui est verrouillée avec une commande d'une porte (33) et/ou d'un pont de transbordement (34) et/ou d'un joint d'étanchéité (35).

9. Procédé destiné au blocage et au déblocage d'au moins un pneu de véhicule à l'aide d'un obstacle, le pneu étant saisi de préférence des deux côtés par des obstacles mobiles et fixables et l'obstacle étant déplacé le long d'un guidage dans le sens de marche du véhicule, **caractérisé par** les étapes suivantes lors du déplacement des obstacles à partir d'une position de repos vers une position de sécurité :
passage d'au moins un pneu de camion derrière un obstacle mobile se trouvant dans sa position d'attente,
accostage à l'ouverture du bâtiment en entraînant l'obstacle,
éloignement du déflecteur de pneu d'une position de repos par rotation autour d'un axe de pivotement horizontal,
déplacement de l'obstacle vers sa position de sécurité,
verrouillage du cadre,
ainsi que par les étapes suivantes lors du déplacement de l'obstacle à partir de sa position de sécurité vers sa position de repos :
déverrouillage du cadre,
déplacement de l'obstacle à partir de sa position de sécurité vers sa position de déblocage,
déplacement du déflecteur de pneu vers sa position de repos par rotation autour d'un axe de pivotement horizontal,
éloignement du pneu de véhicule de l'ouverture du bâtiment en entraînant les obstacles dans leur position de repos,
franchissement de l'obstacle dans sa position de repos.

10. Procédé selon la revendication 9, **caractérisé par** l'affichage d'un signal libre, de préférence par l'affichage de la couleur verte, dans la position de repos et/ou par l'affichage d'un signal de sécurité, de préférence par l'affichage de la couleur rouge, l'affichage du signal libre se faisant de préférence après le déplacement de l'obstacle à partir de sa position de sécurité vers sa position de repos.
